# EUROPEAN PATENT APPLICATION

(11) **EP 4 787 576 A1**
(43) Date of publication of application: **05.08.2026**
(21) Application number: 24869580.1
(22) Date of filing: 06.02.2024
(51) Int. Cl.: H01M 50/244, H01M 50/258

(54) **BATTERY PACK AND VEHICLE**

(30) Priority: 28.09.2023 CN 202322663050 U
(71) Applicant: BYD Company Limited, Shenzhen, Guangdong 518118 (CN)
(72) Inventor: ZHANG, Chengjun, Shenzhen, Guangdong 518118 (CN); GONG, Xubin, Shenzhen, Guangdong 518118 (CN); YAO, Li, Shenzhen, Guangdong 518118 (CN); ZHANG, Zhonglin, Shenzhen, Guangdong 518118 (CN); CAI, Dongping, Shenzhen, Guangdong 518118 (CN)
(74) Representative: Mathys & Squire
(86) International application number: PCT/CN2024/076217
(87) International publication number: WO 2025/066008

(57) **Abstract**

The application discloses a vehicle with a battery pack. The battery pack includes: at least two layers of cell groups, where each layer of cell group includes at least one sub-cell group, the sub-cell group includes a plurality of cells, the plurality of cells in the sub-cell group all extend in a first direction, the plurality of cells in the sub-cell group are arranged in a second direction, and the at least two layers of cell groups are stacked in a third direction; and the first direction, the second direction, and the third direction are perpendicular to each other.

## Description

### CROSS-REFERENCE TO RELATED APPLICATIONS

This application claims priority to Chinese Patent Application No. 202322663050.5, filed on September 28, 2023 and entitled "BATTERY PACK AND VEHICLE", which is incorporated herein by reference in its entirety for all purposes.

### TECHNICAL FIELD

This application relates to the field of batteries, and more specifically, to a battery pack and a vehicle.

### BACKGROUND

Currently, in a battery pack, cells are usually first assembled into a battery module, and then the battery module is integrated into a battery pack. However, in this integration manner, additional structures, such as tie rods and clamping plates for securing the cells need to be used to integrate the cells into the battery module, occupying specific space of the battery pack, and resulting in lower energy density of the battery pack. In addition, in related technologies, the arrangement manner of cells in a battery pack does not sufficiently utilize space in height and width directions of the battery pack.

### SUMMARY

The application is provided to resolve at least one of the foregoing problems. According to a first aspect of this application, a battery pack is provided. The battery pack includes: at least two layers of cell groups, wherein each layer of cell group includes at least one sub-cell group, the sub-cell group includes a plurality of cells, the plurality of cells in the sub-cell group all extend in a first direction, the plurality of cells in the sub-cell group are arranged in a second direction, and the at least two layers of cell groups are stacked in a third direction; and the first direction, the second direction, and the third direction are perpendicular to each other.

In an implementation of this application, each layer of cell group includes two sub-cell groups, and the two sub-cell groups are arranged in the first direction.

In an implementation of this application, a length of each cell ranges from 400 mm to 900 mm.

In an implementation of this application, each layer of a cell group includes one sub-cell group.

In an implementation of this application, a length of each cell ranges from 600 mm to 1200 mm.

In an implementation of this application, an uppermost layer of a cell group in the at least two layers of cell groups is disposed in at least one module housing, and the at least one sub-cell group is disposed in each module housing.

In an implementation of this application, a terminal post opening region is disposed in each module housing, and a terminal post of the cell is disposed in the terminal post opening region; and an insulating film is disposed on a surface of the module housing, and the insulating film at least covers a surface of the module housing that is close to the terminal post opening region.

In an implementation of this application, the insulating film includes a first insulating film, where the first insulating film is disposed on a surface on a side of the module housing that is away from the cell, and the first insulating film is close to the terminal post opening region.

In an implementation of this application, two terminal post opening regions are disposed in the module housing, two first insulating films are disposed on the surface on the side of the module housing that is away from the cell, the two terminal post opening regions respectively corresponding to the two first insulating films, and each first insulating film is close to a corresponding terminal post opening region.

In an implementation of this application, a width of the first insulating film ranges from 8 mm to 20 mm.

In an implementation of this application, the width of the first insulating film is 0.02 times to 0.05 times a total width of the module housing.

In an implementation of this application, a first busbar located above the module housing is separated from a module housing by using one first insulating film; and a width of a first insulating film opposite to a position of the first busbar is 0.12 times to 0.25 times a total width of the module housing.

In an implementation of this application, the insulating film further includes a second insulating film that is disposed on a surface on a side of the module housing that is close to the cell.

In an implementation of this application, the first insulating film and the second insulating film are of an integrated structure.

In an implementation of this application, the battery pack further includes a cabinet, wherein the at least two layers of cell groups are disposed in the cabinet; and the cabinet has a first end and a second end opposite to each other in the second direction, and a power distribution box is disposed on the first end.

In an implementation of this application, a battery energy distribution unit is disposed in the power distribution box, and the battery energy distribution unit is electrically connected to the at least two layers of cell groups.

In an implementation of this application, an electric energy transmission interface is disposed on the second end of the cabinet; and the electric energy transmission interface is electrically connected to the battery energy distribution unit through the first busbar, the first busbar is located in the cabinet, and at least a part of the first busbar is located above the at least two layers of cell groups.

In an implementation of this application, all cells in a same layer of cell group of the at least two layers of cell groups are connected in series, and each layer of cell group is electrically connected to the battery energy distribution unit through a second busbar.

In an implementation of this application, a shock-absorbing pad is disposed between the cabinet and the at least two layers of cell groups.

In an implementation of this application, a cooling plate is disposed between any two adjacent layers of cell groups of the at least two layers of cell groups.

According to a second aspect of this application, a vehicle is provided. The vehicle includes: a vehicle body, and any one of the battery packs disposed on the vehicle body.

According to the battery pack and the vehicle provided in embodiments of this application, the at least two layers of cell groups are disposed in the battery pack. Each layer of cell group includes the at least one sub-cell group. The sub-cell group includes the plurality of cells. The plurality of cells in the sub-cell group all extend in the first direction. The plurality of cells in the sub-cell group are arranged in the second direction. The at least two layers of cell groups are stacked in the third direction. The first direction, the second direction, and the third direction are perpendicular to each other. In comparison with the related cell arrangement manner of a battery pack, in this application, the battery pack includes the at least two layers of cell groups, and each sub-cell group in the at least one layer of cell group is assembled in a module-free form, so that the cells can be more compactly arranged in the battery pack, fully utilizing height space of the battery pack.

### BRIEF DESCRIPTION OF DRAWINGS

To describe technical solutions in embodiments of the present invention more clearly, the following briefly describes the accompanying drawings required for describing embodiments. It is clear that the accompanying drawings in the following description show merely some embodiments of the application, and a person of ordinary skill in the art may still derive other drawings from these accompanying drawings without creative efforts.
FIG. 1 is a diagram of a structure of a battery pack according to an embodiment of the application;
FIG. 2 is an exploded view of a structure of a battery pack according to another embodiment of the application;
FIG. 3 is a diagram of a circuit loop according to an embodiment of the application;
FIG. 4 is a cross-sectional view of a battery pack according to an embodiment of the application;
FIG. 5 is a diagram of a structure of a battery module according to an embodiment of the application;
FIG. 6 is a bottom view of the battery module in FIG. 5;
FIG. 7 is a rear view of the battery module in FIG. 5; and
FIG. 8 is a partial enlarged view of C in FIG. 7.

Reference numerals:
10: cell; 20: cooling plate; 30: insulating plate; 41: tray; 42: cover plate;
43: side beam; 50: power distribution box; 51: first busbar; 52: second busbar;
61: first insulating film; 62: second insulating film; 63: metal pressing plate.

### DESCRIPTION OF EMBODIMENTS

To make objectives, technical solutions, and advantages of the application clearer, the following describes example embodiments of the application in detail with reference to the accompanying drawings. Clearly, the described embodiments are merely a part rather than all of embodiments of the application. It will be understood that the application is not limited to the example embodiments described herein. All other embodiments obtained by a person skilled in the art based on embodiments of the application without creative efforts shall fall within the protection scope of the application.

In the following descriptions, a lot of specific details are given to provide a more thorough understanding of the application. However, it will be apparent to those skilled in the art that the application may be implemented without one or more of these details. In other examples, to avoid confusion with the application, some technical features known in the art are not described.

It will be understood that the application can be implemented in different forms and should not be construed as limited to embodiments described herein. On the contrary, these embodiments are provided so that this disclosure will be thorough and complete, and the scope of the application is fully conveyed to a person skilled in the art.

For a thorough understanding of the application, detailed structures are provided in the following descriptions, to explain the technical solution provided in the application. Optional embodiments of the application are described in detail below. However, in addition to these detailed descriptions, the application may have other implementations.

Implementations of the application are described in detail below with reference to the accompanying drawings. When no conflict occurs, the following embodiments and the features in the embodiments can be mutually combined.

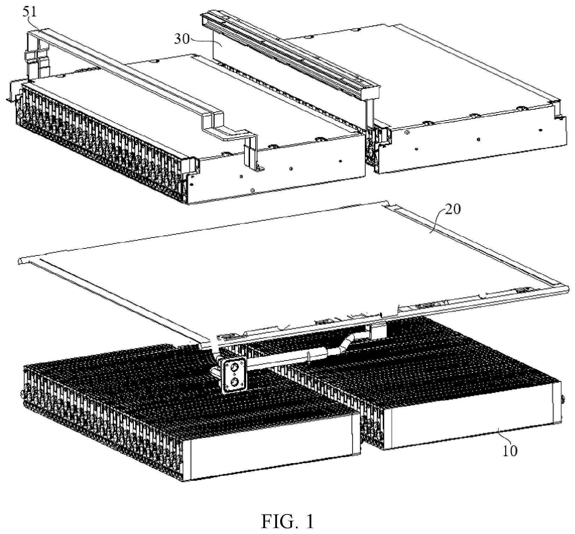

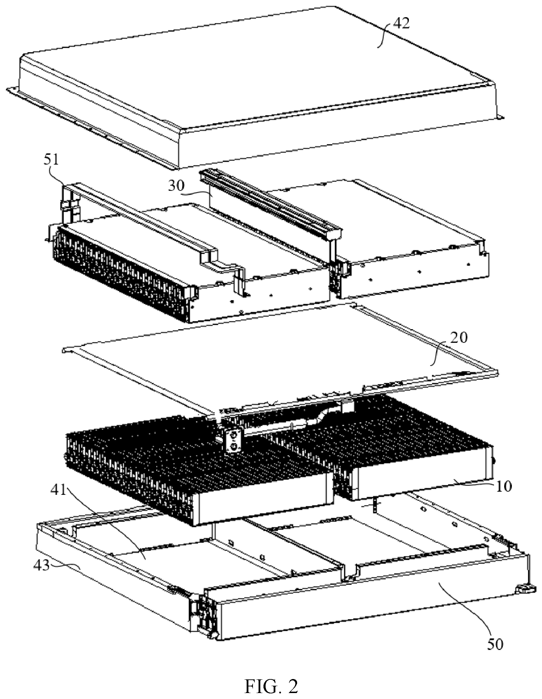

This application provides a battery pack. Referring to FIG. 1 and FIG. 2, the battery pack includes at least two layers of cell groups. Each layer of cell group includes at least one sub-cell group, the sub-cell group includes a plurality of cells 10, the plurality of cells 10 in the sub-cell group all extend in a first direction, the plurality of cells 10 in the sub-cell group are arranged in a second direction, and the at least two layers of cell groups are stacked in a third direction; and the first direction, the second direction, and the third direction are perpendicular to each other.

In the foregoing solution, the at least two layers of cell groups are disposed in the battery pack. Each layer of cell group includes the at least one sub-cell group. The sub-cell group includes the plurality of cells 10. The plurality of cells 10 in the sub-cell group all extend in the first direction. The plurality of cells 10 in the sub-cell group are arranged in the second direction. The at least two layers of cell groups are stacked in the third direction. The first direction, the second direction, and the third direction are perpendicular to each other. In comparison with a related cell arrangement manner of a battery pack, in this application, the battery pack includes the at least two layers of cell groups, and each sub-cell group in the at least one layer of cell group is assembled in a module-free form, so that the cells 10 can be more compactly arranged in the battery pack, fully utilizing height space of the battery pack. The following describes the foregoing structures in detail with reference to the accompanying drawings.

When a type of each cell 10 is determined, for example, each cell 10 may be a short cell, or a long cell. It should be noted that the short cell and the long cell are clearly defined in this field. The short cell is a cell whose length does not exceed a first preset value, and the long cell is a cell whose length exceeds a second preset value. The first preset value and the second preset value may be equal or unequal, and even the first preset value may be greater than the second preset value. For example, a length of the short cell may range from 400 mm to 900 mm, and a length of the long cell may range from 600 mm to 1200 mm. Referring to FIG. 1, a shape of the cell 10 may be specifically a short cell or a long cell with a thin thickness, or may be a rectangular block cell with a slightly thick thickness. The rectangular block cell may be specifically, for example, but not limited to, a square aluminum-cased cell. The shape of the cell 10 may alternatively be a cylindrical cell. Electrodes of the cell 10 are disposed on two ends of a first direction of the cell 10, and may be specifically positive and negative electrodes of the cell 10. The positive and negative electrodes of the cell 10 may be respectively disposed on the two ends of the first direction of the cell 10. That is, one electrode is disposed on each of the two ends of the first direction of the cell 10, and the electrode may be a positive electrode or a negative electrode. Certainly, the positive and negative electrodes of the cell 10 may alternatively be disposed only on one end of the first direction of the cell 10, or disposed on a surface of the cell 10 in a third direction.

As shown in FIG. 1, FIG. 2, and FIG. 4, each layer of a cell group includes a plurality of cells 10, and the plurality of cells 10 form at least one sub-cell group. Specifically, each sub-cell group may include a plurality of cells 10, the plurality of cells 10 are arranged in a single row, and a plurality of cells 10 in a same row of cells 10 are arranged in a second direction. That is, a plurality of cells 10 in each row of cells 10 are sequentially arranged in a linear configuration in the same second direction. Each sub-cell group includes one row of cells 10. It can be understood that an arrangement direction of each row of cells 10 is different from the first direction. The second direction may be a direction substantially perpendicular to the first direction, so that positive and negative electrodes of each cell 10 are respectively located on the two ends of the first direction, thereby increasing a spacing between different electrodes, and avoiding a risk of high-voltage arc breakdown. For example, when a long cell 10 with a thin thickness is used for the cell 10, the second direction may be a thickness direction of the cell 10, so that more cells 10 can be arranged in each layer of cell group, increasing density of the cell 10, thereby increasing energy density of the battery pack.

When a quantity of layers of cell groups in the battery pack is determined, the quantity of layers of cell groups that may be included in the battery pack may be two, three, four, five, or the like. The battery pack adopts an arrangement manner of at least two layers of cell groups, so that space of the battery pack can be fully utilized, increasing energy density of the battery pack. When a quantity of rows of cells 10 in each layer of cell group is determined, for example, at least one layer of cell group may include one row of cells 10, two rows of cells 10, three rows of cells 10, four rows of cells 10, or more rows of cells 10. Each row of cells 10 may be used as one sub-cell group. That is, a plurality of cells 10 in each layer of cell group may be arranged in a single row, two rows, three rows, or the like. When at least two rows of cells 10 are arranged in each layer of cell group, arrangement density of the cells 10 can be increased, space inside the battery pack is fully utilized, thereby increasing energy density of the battery pack. A stacking direction of the at least two layers of cell groups is the third direction, and the third direction is substantially perpendicular to both the first direction and the second direction, that is, the first direction, the second direction, and the third direction are perpendicular to each other. For example, when a long cell 10 with a thin thickness is used for the cell 10, the third direction may be a width direction of the cell 10. It will be understood that the foregoing description only shows a stacking direction of different layers of cell groups.

For example, each layer of cell group may include at least two sub-cell groups. Specifically, each layer of cell group may include two sub-cell groups, three sub-cell groups, or the like. For example, when each layer of cell group includes two sub-cell groups, the two sub-cell groups are arranged in the first direction, that is, the two sub-cell groups are arranged in a length direction of the cell. In some embodiments, a length of each cell may range from 400 mm to 900 mm, that is, each cell 10 may be a short cell 10. Two rows of cells 10 in the same layer are arranged side by side, increasing arrangement density of the cells 10. For example, each layer of cell group may further include one sub-cell group, and a plurality of cells 10 in the sub-cell group are arranged in a single row. In some embodiments, a length of each cell may range from 600 mm to 1200 mm, that is, each cell 10 may be a long cell 10, increasing arrangement density of the cells 10. For example, referring to FIG. 1 and FIG. 2, two adjacent sub-cell groups in each layer of cell group may be separated by using an insulating plate 30.

For example, in at least two layers of cell groups, at least a part of cells 10 may first be disposed in one module housing to assemble into a battery module. Specifically, a part of the cells 10 may be disposed in the module housing to assemble into a battery module, or all cells 10 may be disposed in the module housing to assemble into a battery module. In some embodiments, an uppermost layer of cell group in the at least two layers of cell groups is disposed in at least one module housing, and the at least one sub-cell group is disposed in each module housing. One row of cells 10 is disposed in one module housing.

For example, regardless of whether the uppermost layer of cell group includes one sub-cell group or a plurality of sub-cell groups, all cells 10 in the uppermost layer of cell group may be disposed in one module housing to assemble into one battery module. For example, regardless of whether the uppermost layer of cell group includes one row of cells 10 or at least two rows of cells 10, all cells 10 in the uppermost layer of cell group may be disposed in one module housing to assemble into one battery module.

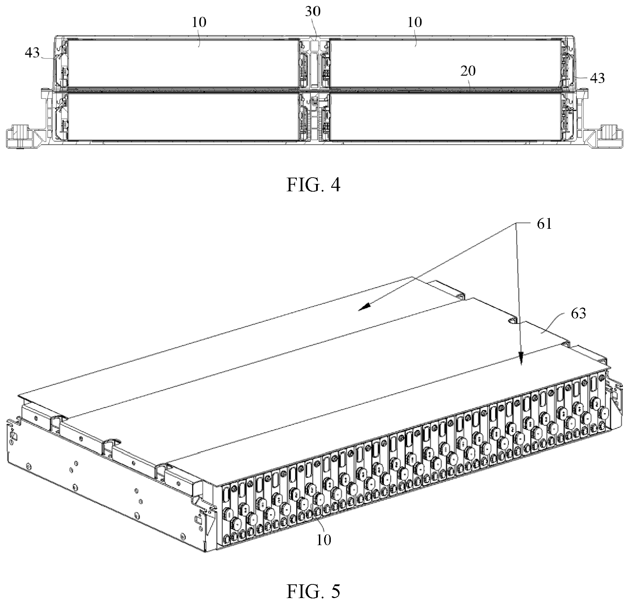

In some embodiments, referring to FIG. 5, when the uppermost layer of cell group includes at least two rows of cells 10, each row of cells 10 is used as one sub-cell group. A quantity of rows of cells 10 in the uppermost layer of cell group may be equal to a quantity of module housings, and one row of cells 10 may be disposed in one module housing, that is, one sub-cell group is disposed in one module housing.

Referring to FIG. 1 and FIG. 5, in the at least two layers of cell groups, each row of cells 10 may be used as one battery module. That is, in all rows of cells 10 in the battery pack, individual cells 10 in a part of rows of cells 10 may be directly arranged in the battery pack, or each row of cells 10 in a part of rows of cells 10 may be first assembled into one battery module, and then the battery module is disposed in the battery pack as one row of cells 10.

Referring to FIG. 1, for example, an uppermost layer and a lowermost layer of the at least two layers of cell groups may use different cell arrangement manners. Specifically, each sub-cell group of the uppermost layer of cells 10 of the at least two layers of cell groups may be assembled into one battery module, and the battery module may be hoisted into the battery pack, utilizing ease of assembly of the battery module to enhance assemblability and simplify overall assembly difficulty of the battery pack. In this case, all rows of cells 10 of the lowermost layer of cells 10 of the at least two layers of cell group may be assembled into CTP. It should be noted that the CTP is a module-free arrangement manner. That is, all cells 10 in the lowermost layer of cells 10 may be directly arranged in the battery pack, increasing the arrangement density of the cells 10. Certainly, the lowermost layer of cell group may also use a module arrangement form similar to that used by the uppermost layer of cell group, or another cell arrangement form. This is not limited herein.

In some embodiments, the uppermost layer of cell group and the lowermost layer of cell group of the at least two layers of cell groups may use a same cell arrangement manner. For example, both the lowermost layer of cell group and the uppermost layer of cell group may use a CTP arrangement form. In addition, selection of a specific row of cells 10 as the battery module is not limited to the foregoing manner in which all the rows of cells 10 in the uppermost layer are used as the battery module. In addition, another disposition manner may be used.

The battery module may be assembled in a plurality of manners. For example, referring to FIG. 5, a terminal post opening region is disposed in each module housing. The terminal post opening region may be an opening provided in the module housing. A terminal post of the cell 10 is disposed in the terminal post opening region that is used as a terminal post region of the battery module. It should be noted that the terminal post region is an exposed region of the electrode of the cell 10 in the battery module. When the terminal post region is disposed, the battery module may include two terminal post regions, that is, two terminal post opening regions are disposed on the module housing. The two terminal post opening regions may be respectively disposed on two ends of the length direction of the cell 10 or the first direction. When positive and negative electrodes of each cell 10 are respectively located on two ends of the length direction of the cell 10, two terminal post regions are formed on two ends of the plurality of cells 10 in the battery module. Certainly, when the positive and negative electrodes of each cell 10 are led out from a same side of the cell 10, one terminal post region may be further disposed on the battery module. In this case, one terminal post region is formed on a lead-out side of a plurality of cells 10 in the battery module. The electrodes may be led out from one end of the two ends of the length direction of the cell 10, and the correspondingly formed terminal post region is located on one end of the battery module in the first direction. Certainly, the positive and negative electrodes of the cell 10 may be alternatively disposed in a region with a large surface area in the cell 10. In this case, because the cells 10 are arranged in the second direction, one or two correspondingly formed terminal post regions all extend in the second direction.

For example, an insulating film may be disposed on a surface of the module housing, and the insulating film at least covers a surface of the module housing that is close to the terminal post opening region, to insulate the terminal post region of the battery module from the module housing. For example, the insulating film may cover only a surface of the module housing that is close to the terminal post opening region, or may cover all surfaces of the module housing.

For example, referring to FIG. 5, FIG. 6, FIG. 7, and FIG. 8, the insulating film may not include the first insulating film 61. The first insulating film 61 is disposed on a surface on a side of the module housing that is away from the cell 10, and the first insulating film 61 is close to the terminal post opening region. That is, the first insulating film 61 is further disposed on a side of an outer surface of the module housing that surrounds the terminal post opening region. This can increase insulation, enhance a creepage distance, and ensure high-voltage safety in an extreme case such as leakage and water ingress. For example, when the two terminal post opening regions on the module housing are located on two opposite ends or on one end in the first direction, first insulating films 61 may be disposed on both an upper surface and a lower surface of the module housing that are away from the cell 10. Certainly, the first insulating film 61 may alternatively be disposed on a side of a side surface of the module housing that is away from the cell 10.

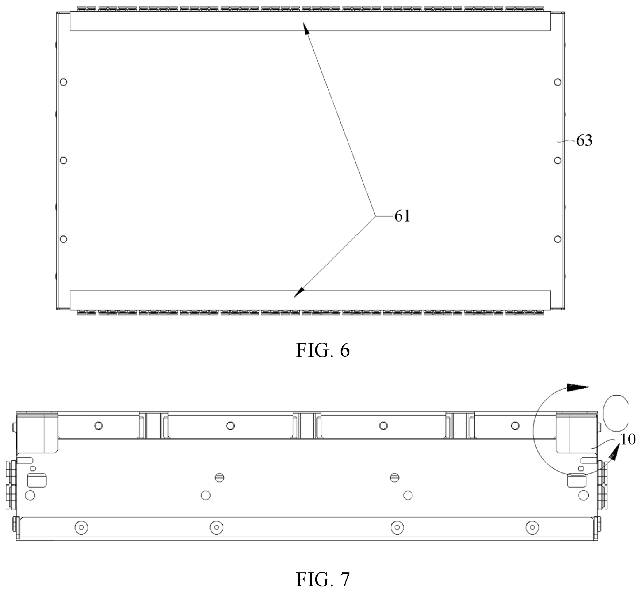

For example, referring to FIG. 5 and FIG. 6, when the two terminal post opening regions are disposed on the two opposite ends of the module housing in the first direction, two first insulating films 61 may be disposed on a surface on the side of the module housing that is away from the cell 10. The two terminal post opening regions respectively correspond to the two first insulating films 61, and each first insulating film 61 is close to a corresponding terminal post region. In this case, two first insulating films 61 are disposed on each outer surface of upper and lower sides of the module housing at a position of each terminal post opening region. One first insulating film 61 is disposed at an edge of one terminal post opening region, and the other first insulating film 61 is disposed at an edge of the other terminal post opening region. This can increase insulation, enhance a creepage distance, and ensure high-voltage safety in an extreme case such as leakage and water ingress.

For example, referring to FIG. 5, FIG. 7, and FIG. 8, a second insulating film 62 may be disposed on a surface on a side of the module housing that is close to the cell 10, that is, the second insulating film 62 is disposed on a side of the module housing that faces the cell 10. The second insulating film 62 may be disposed on the upper surface and the lower surface of the module housing, or may be disposed on the side surface of the module housing.

For example, the module housing may include a metal pressing plate 63, the battery module integrates the plurality of cells 10 together by using the metal pressing plate 63, and the second insulating film 62 may be disposed between the metal pressing plate 63 and the cells 10, so that the second insulating film 62 separates the cells 10 from the metal pressing plate 63. This increases insulation, enhances a creepage distance, and ensures high-voltage safety in an extreme case such as leakage and water ingress. When a material of the second insulating film 62 and the first insulating film 61 is determined, the material of the second insulating film 62 and the first insulating film 61 may be, for example, but not limited to, an insulating material such as PI or rubber.

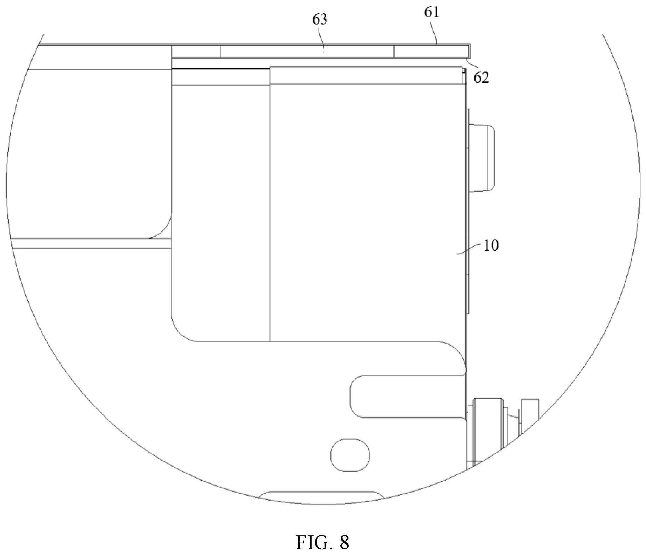

For example, referring to FIG. 8, the first insulating film 61 and the second insulating film 62 may be of an integrated structure. In this case, the first insulating film 61 may be considered as a part of the second insulating film 62 that is formed by being outwardly folded from an inner surface of the module housing. Therefore, an edge of the metal pressing plate 63 can be completely wrapped, thereby improving insulation effect. Certainly, it should be noted that a manner of disposing the first insulating film 61 and the second insulating film 62 is not limited to the foregoing manner. In addition, another manner may be used. For example, the first insulating film 61 and the second insulating film 62 may be separately provided. The second insulating film 62 may be a strip-shaped insulating film, that is attached to the surface on the side of the module housing that is away from the cell 10 along one terminal post opening region. A width of the first insulating film 61 means a spacing between two opposite sides of the strip insulating film in a narrower direction.

When the width of the first insulating film 61 is determined, the width of the first insulating film 61 may be not less than 8 mm, to maximize insulation performance and a creepage distance, and ensure high-voltage safety in an extreme case such as leakage and water ingress. For example, the width of the first insulating film 61 may be any value between 8 mm and 20 mm, such as 8 mm, 10 mm, 12 mm, 14 mm, 16 mm, 18 mm, 20 mm, or the like. Certainly, the width of the first insulating film 61 may also be correlated with a total width of the module housing. The total width of the module housing is a total width of the battery module. When the total width of the module housing is wider, a width of each first insulating film 61 may be wider. When the total width of the module housing is narrower, the width of each first insulating film 61 may be narrower. For example, the width of the first insulating film 61 may be 0.02 times to 0.05 times the total width of the module housing. Specifically, the width of the first insulating film 61 may be any value from 0.02 times to 0.05 times the total width of the module housing, for example, may be 0.02 times, 0.03 times, 0.05 times, or 0.05 times the total width of the module housing.

For example, referring to FIG. 1 and FIG. 5, a first busbar 51 located above the module housing is separated from a module housing by using one first insulating film 61, and the first busbar 51 may be configured to connect a power distribution box 50 and an external electric energy transmission interface, prevent the first busbar 51 from interfering with the battery module, and preventing the battery module from affecting normal operation of the first busbar 51. It may be understood that, when the first busbar 51 is disposed on a side surface of the battery module, a corresponding first insulating film 61 is also disposed on the side surface of the battery module. For example, a width of the first insulating film 61 opposite to a position of the first busbar 51 may be 0.12 times to 0.25 times the total width of the module housing. That is, a width of the first insulating film 61 between the first busbar 51 and the battery housing is wider than a first insulating film 61 without a corresponding first busbar 51. Specifically, the width of the first insulating film 61 between the first busbar 51 and the battery housing may be any value from 0.12 times to 0.25 times the total width of the module housing, for example, may be 0.12 times, 0.15 times, 0.18 times, 0.20 times, 0.22 times, and 0.25 times the total width of the module housing. This can increase insulation, enhance a creepage distance, and ensure high-voltage safety in an extreme case such as leakage and water ingress.

In another embodiment, the first insulating film 61 may be at least 8 mm wider than the first busbar 51, that is, the first insulating film 61 is wider than the first busbar 51, ensuring that a distance between a side of the first busbar 51 and a side of the first insulating film 61 is not less than 8 mm. For example, the first insulating film 61 may be 8 mm to 20 mm wider than the first busbar 51. This can increase insulation, enhance a creepage distance, and ensure high-voltage safety in an extreme case such as leakage and water ingress.

For example, the lowermost layer of cell group of the at least two layers of cell groups may be assembled into a battery module, and the uppermost layer of cell group of the at least two layers of cell groups may be assembled into CTP.

Certainly, in addition to the foregoing manner, another arrangement manner may also be used. For example, the at least two layers of cell groups may be assembled in a CTC manner. It should be noted that the CTC means that the cell 10 is directly integrated into the vehicle chassis. In this case, the cover plate 42 of the battery pack and the chassis of the vehicle may be integrated into an integrated structure.

In addition, referring to FIG. 1, FIG. 2, and FIG. 4, the battery pack may further include a cabinet, and at least two layers of cell groups are disposed in the cabinet. A plurality of setting manners may be used when the cabinet is disposed. For example, the cabinet may include a tray 41 configured to support the at least two layers of cell groups, may further include a cover plate 42 covering the at least two layers of cell groups, and may further include a side beam 43 connected between the cover plate 42 and the tray 41. The side beam 43 may be disposed on a side of the tray 41. Specifically, the side beam 43 may be disposed on the tray 41 in a manner, for example, but not limited to, soldering, screw connection, clamping, or integration.

Referring to FIG. 1, FIG. 2, and FIG. 4, the cabinet has a first end and a second end opposite to each other in the second direction, that is, a plurality of cells 10 in each row of cells 10 are sequentially arranged from the first end of the cabinet to the second end of the cabinet. A power distribution box 50 may be disposed at the first end of the cabinet, so that the power distribution box 50 is directly opposite to a non-electrode end of each row of cells 10, thereby reducing a risk that gas from the cells 10 directly sprays onto a module, for example, but not limited to, the battery energy distribution unit in the power distribution box 50 during thermal runaway. In addition, this also facilitates an electrical connection between the module in the power distribution box 50 and each row of cells 10, thereby reducing a wiring length in the battery pack, and reducing a risk of a high-voltage loop breakdown.

Referring to FIG. 1, a plurality of modules may be disposed in the power distribution box 50. A battery energy distribution unit may be disposed in the power distribution box 50, and a module such as a battery information collector may be disposed. When the battery energy distribution unit is electrically connected to the at least two layers of cell groups, the battery energy distribution unit may be electrically connected to at least one positive electrode and at least one negative electrode in the at least two layers of cell groups. For example, the battery energy distribution unit may have only one positive terminal and one negative terminal. The positive terminal is electrically connected to one positive electrode of the at least two layers of cell groups. A specific manner of the electrical connection may be, for example, but not limited to, busbar, or flexible wire. Certainly, the manner of the electrical connection between the battery energy distribution unit and the at least two layers of cell groups is not limited to the foregoing manner. In addition, another manner may be used. For example, all cells 10 in the same layer of a cell group of the at least two layers of cell groups may be connected in series, and each layer of cell group is electrically connected to the battery energy distribution unit through a second busbar 52. That is, a plurality of cells 10 in an upper layer of cell group are connected in series, a plurality of cells 10 in a lower layer of cell group are connected in series, and then the upper layer of cell group and the lower layer of cell group are connected in series through the second busbar 52 in the power distribution box 50, so that only one power distribution box 50 needs to be disposed.

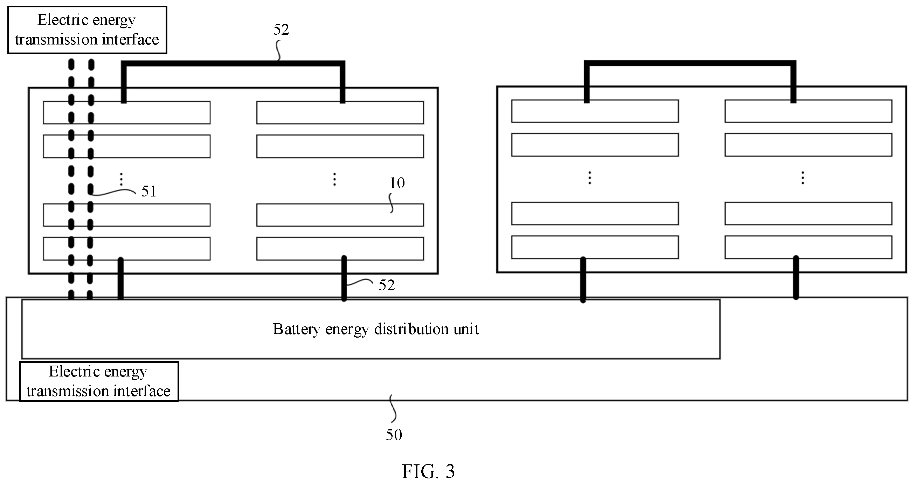

For example, referring to FIG. 3, two adjacent rows of cells 10 in the same layer of cell group may be electrically connected through the second busbar 52, that is, different rows of cells 10 in the same layer of cell group are electrically connected through the second busbar 52. This can reduce a quantity of interfaces through which the battery energy distribution unit is electrically connected to the at least two rows of cells 10, and a quantity of wires between the battery energy distribution unit and the at least two layers of cell groups, thereby reducing a risk of high-voltage breakdown. A material of the second busbar 52 may be, for example, but not limited to, a conductive copper bar. It should be noted that, in FIG. 3, a left side means the upper layer of cell group, a right side means the lower layer of cell group, and the first busbar 51 is disposed only above the upper layer of cell group. The second busbar 52 may be disposed at the first end or the second end of the cabinet, so as to prevent the second busbar 52 from interfering with the at least two layers of cell groups.

Referring to FIG. 1, one electric energy transmission interface may be disposed in the power distribution box 50, and the electric energy transmission interface may be directly electrically connected to the battery energy distribution unit in the power distribution box 50, so as to output electric energy externally. The electric energy transmission interface may be assembled in the power distribution box 50 through a plug connector. Certainly, as shown in FIG. 1 and FIG. 2, an electric energy transmission interface may also be disposed at the second end of the cabinet, that is, two electric energy transmission interfaces are disposed in the battery pack. The electric energy transmission interface may be assembled at the second end of the cabinet through a plug connector. The electric energy transmission interface at the second end of the cabinet may be electrically connected to the battery energy distribution unit in a plurality of manners. For example, the electric energy transmission interface may be electrically connected to the battery energy distribution unit through a first busbar 51. The first busbar 51 is located in the cabinet. The first busbar 51 may be specifically, for example, but not limited to, a conductive copper bar. Alternatively, at least a part of the first busbar 51 may be located above the at least two layers of cell groups, so as to prevent the first busbar 51 from affecting an arrangement structure of the cells 10. Specifically, the first busbar 51 may alternatively be completely located above the at least two layers of cell groups. Alternatively, a part of the first busbar 51 may be located above the at least two layers of cell groups, and another part may be located on a side of the at least two layers of cell groups. As described above, the first busbar 51 is isolated from the uppermost layer of cell group by using a first insulating film 61, so as to prevent a fault such as an open circuit and a short circuit from occurring between the first busbar 51 and the uppermost layer of cell group. The first busbar 51 may be disposed only above the uppermost layer of cells 10, and does not need to be disposed in a lower layer of cells 10, thereby not occupying space in a lower layer.

Referring to FIG. 1, a cooling plate 20 may be disposed between any two adjacent layers of cell groups of the at least two layers of cell groups. Different layers of cell groups are separated by cooling plates 20, so that the cells 10 are arranged in a grid shape. The cooling plate 20 may be specifically a direct cooling plate, or may be a water cooling plate. In the foregoing manner, a heat radiation area between the cooling plates 20 and the cells 10 can be increased, and cooling and heat dissipation effect can be improved. In addition, the cooling plates 20 are arranged between the different layers of cell groups, so that the different layers of cell groups are effectively isolated, thereby preventing the different layers of cell groups from interfering with each other, and alleviating thermal runaway and high pressure. A plurality of setting manners may be used when the cooling plate 20 is disposed. For example, the lowermost layer of cell group may be bonded to the tray 41 by using structural adhesive, and the lowermost layer of cell group may be bonded to the cooling plate 20 by using thermally conductive adhesive. Then, the lowermost layer of cell group is inverted and placed into the tray 41. The uppermost layer of cell group may be bonded to a mechanical part of the uppermost layer of cell group by using structural adhesive in advance, assembled into a battery module, and then hoisted into the battery pack. A battery module in an uppermost layer may be bonded to the cooling plate 20 by using thermally conductive structural adhesive.

In addition, referring to FIG. 2, a shock-absorbing pad may be disposed between the cabinet and the at least two layers of cell groups. The shock-absorbing pad separates the cell group from an inner wall of the cabinet, thereby protecting the cell 10. The shock-absorbing pad material may be, for example, but is not limited to, an insulating and deformable material such as shock-absorbing foam, or elastic rubber.

In the foregoing implementations, the at least two layers of cell groups are disposed in the battery pack. Each layer of cell group includes the at least one sub-cell group. The sub-cell group includes the plurality of cells 10. The plurality of cells 10 in the sub-cell group all extend in the first direction. The plurality of cells 10 in the sub-cell group are arranged in the second direction. The at least two layers of cell groups are stacked in the third direction. The first direction, the second direction, and the third direction are perpendicular to each other. In comparison with a related cell arrangement manner of a battery pack, in this application, the battery pack includes the at least two layers of cell groups, and each sub-cell group in the at least one layer of cell group is assembled in a module-free form, so that the cell group can be more compactly arranged in the battery pack, fully utilizing height space of the battery pack.

In addition, this application provides a vehicle. Referring to FIG. 1 to FIG. 8, the vehicle includes: a vehicle body, and any one of the battery packs disposed on the vehicle body. The vehicle may be specifically, for example, but not limited to, a passenger vehicle, a truck, or a special-purpose engineering vehicle. The vehicle body includes structures such as a frame, a wheel, a transmission, and a steering wheel, and any one of the battery packs disposed on the vehicle body.

The application is described with the foregoing embodiments, but it will be understood that the foregoing embodiments are merely for purposes of illustration and description, and are not intended to limit the application to the scope of the described embodiments. In addition, a person skilled in the art will understand that, the application is not limited to the foregoing embodiments, and more variations and modifications may be made according to teachings of the application, and all these variations and modifications fall within the protection scope claimed in the application. The scope of protection of the application is defined by the appended claims and their equivalents.

## Claims

1. A battery pack, comprising:
at least two layers of cell groups, wherein each layer of cell group comprises at least one sub-cell group, the sub-cell group comprises a plurality of cells (10), the plurality of cells in the sub-cell group all extend in a first direction, the plurality of cells in the sub-cell group are arranged in a second direction, and the at least two layers of cell groups are stacked in a third direction; and the first direction, the second direction, and the third direction are perpendicular to each other.

2. The battery pack according to claim 1, wherein each layer of cell group comprises two sub-cell groups, and the two sub-cell groups are arranged in the first direction.

3. The battery pack according to claim 2, wherein a length of each cell ranges from 400 mm to 900 mm.

4. The battery pack according to claim 1, wherein each layer of cell group comprises one sub-cell group.

5. The battery pack according to claim 4, wherein a length of each cell ranges from 600 mm to 1200 mm.

6. The battery pack according to any one of claims 1 to 5, wherein an uppermost layer of a cell group in the at least two layers of cell groups is disposed in at least one module housing, and the at least one sub-cell group is disposed in each module housing.

7. The battery pack according to claim 6, wherein a terminal post opening region is disposed in each module housing, and a terminal post of the cell is disposed in the terminal post opening region; and
an insulating film is disposed on a surface of the module housing, and the insulating film at least covers a surface of the module housing that is close to the terminal post opening region.

8. The battery pack according to claim 7, wherein the insulating film comprises:
a first insulating film (61), wherein the first insulating film is disposed on a surface on a side of the module housing that is away from the cell, and the first insulating film is close to the terminal post opening region.

9. The battery pack according to claim 8, wherein two terminal post opening regions are disposed in the module housing, two first insulating films are disposed on the surface on the side of the module housing that is away from the cell, the two terminal post opening regions respectively correspond to the two first insulating films, and each first insulating film is close to a corresponding terminal post opening region.

10. The battery pack according to claim 8 or 9, wherein a width of the first insulating film ranges from 8 mm to 20 mm.

11. The battery pack according to any one of claims 8 to 10, wherein the width of the first insulating film is 0.02 times to 0.05 times a total width of the module housing.

12. The battery pack according to any one of claims 8 to 11, wherein a first busbar (51) located above the module housing is separated from a battery module by using one first insulating film; and
a width of a first insulating film opposite to a position of the first busbar is 0.12 times to 0.25 times a total width of the battery module.

13. The battery pack according to any one of claims 8 to 12, wherein the insulating film further comprises a second insulating film (62) that is disposed on a surface on a side of the module housing that is close to the cell.

14. The battery pack according to claim 13, wherein the first insulating film and the second insulating film are of an integrated structure.

15. The battery pack according to any one of claims 1 to 14, further comprising a cabinet, wherein the at least two layers of cell groups are disposed in the cabinet; and
the cabinet has a first end and a second end opposite to each other in the second direction, and a power distribution box is disposed on the first end (50).

16. The battery pack according to claim 15, wherein a battery energy distribution unit is disposed in the power distribution box, and
the battery energy distribution unit is electrically connected to the at least two layers of cell groups.

17. The battery pack according to claim 16, wherein an electric energy transmission interface is disposed on the second end of the cabinet; and
the electric energy transmission interface is electrically connected to the battery energy distribution unit through the first busbar, the first busbar is located in the cabinet, and at least a part of the first busbar is located above the at least two layers of cell groups.

18. The battery pack according to claim 16 or 17, wherein all cells in a same layer of cell group of the at least two layers of cell groups are connected in series, and each layer of cell group is electrically connected to the battery energy distribution unit through a second busbar (52).

19. The battery pack according to any one of claims 15 to 18, wherein a shock-absorbing pad is disposed between the cabinet and the at least two layers of cell groups.

20. The battery pack according to any one of claims 1 to 19, wherein a cooling plate (20) is disposed between any two adjacent layers of cell groups of the at least two layers of cell groups.

21. A vehicle, comprising:
a vehicle body; and
the battery pack according to any one of claims 1 to 20 that is disposed in the vehicle body.
